# EUROPEAN PATENT APPLICATION

(11) **EP 4 764 651 A1**
(43) Date of publication of application: **24.06.2026**
(21) Application number: 25222803.6
(22) Date of filing: 12.12.2025
(51) Int. Cl.: G02B 27/00, G02B 27/01, G02B 3/00, G02B 5/10, G02B 6/34, G02B 27/09, G02B 27/42

(54) **OPTICAL APPARATUS, MODULES AND DEVICES**

(30) Priority: 23.12.2024 GB 202418929
(71) Applicant: Nokia Technologies Oy, 02610 Espoo (FI)
(72) Inventor: JÄRVENPÄÄ, Toni Johan, Akaa (FI); SALMIMAA, Marja Pauliina, Tampere (FI)
(74) Representative: Nokia EPO representatives

(57) **Abstract**

Examples of the disclosure relate to optical apparatus, modules and devices for providing a head up display (HUD) or mediated reality headset. The optical apparatus can comprise a light guide configured to receive an input beam of light and provide an expanded output beam of light and one or more optical components configured to adjust the expanded output beam of light. At least two items of the light guide and the one or more optical components are arranged so that a first item has a first optical power in a first axis and a second item has a second optical power in a second axis. The second axis is different to the first axis and the optical powers of the respective items are configured to focus the expanded output beam of light.

## Description

### TECHNOLOGICAL FIELD

Examples of the disclosure relate to optical apparatus, modules and devices. Some relate to optical apparatus, modules and devices for providing a head up display (HUD) or mediated reality headset.

### BACKGROUND

Optical apparatus, such as exit pupil expanders, can be used in display systems and devices such as near eye displays, augmented and/or virtual reality headsets and head up displays for example. Problems can arise in such apparatus if reflections from curved components causes distortions.

### BRIEF SUMMARY

According to various, but not necessarily all, examples of the disclosure there is provided an apparatus comprising:
a light guide configured to receive an input beam of light and provide an expanded output beam of light; and
one or more optical components configured to adjust the expanded output beam of light;
where at least two items of the light guide and the one or more optical components are arranged so that a first item has a first optical power in a first axis and a second item has a second optical power in a second axis wherein the second axis is different to the first axis and the optical powers of the respective items are configured to focus the expanded output beam of light.

The light guide may comprise in-coupling diffractive means configured to in-couple one or more input beams of light into the light guide, expanding diffractive means configured to expand the one or more input beams of light, and out-coupling diffractive means configured to out-couple the one or more beams of light from the light guide to provide an expanded output beam of light.

The first optical power may be provided by at least one curved surface of the first item and the second optical power may be provided by at least one curved surface of the second item.

The at least one curved surface of the first item may be curved around the first axis and the at least one curved surface of the second item may be curved around the second axis different to the first axis.

The curvature of one or more of the curved surfaces may change across the curved surface.

The curvature of one or more of the curved surfaces may be consistent across the curved surface.

The first item may comprise a surface with a convex curvature and the second item may comprise a surface with a concave curvature.

The first axis may be substantially perpendicular to the second axis.

The light guide may be curved and the one or more optical components may comprise a mirror with a curved surface.

The light guide may be curved and the one or more optical components may comprise a lens with a curved surface.

The apparatus may comprises an adjustment module configured to enable adjustment of a curvature of at least one of:
the light guide;
the one or more optical components.

Diffractive means of the light guide may be configured to account for curvature of the light guide.

The light guide may be planar and the one or more optical components comprises a mirror with a curved surface and a lens with a curved surface.

The apparatus may be configured to provide a head-up display on a windshield and the optical powers of the items is arranged to compensate for curvature of the windshield and provide a focused image reflected from the windshield.

The apparatus may be configured for use in at least one of:
a console display;
a virtual reality display;
an augmented reality display and comprises one or more lenses configured to compensate for the curved lens.

The device may comprise at least one of:
a terrestrial vehicle;
an aquatic vehicle;
an aerial vehicle.

According to various, but not necessarily all, embodiments there is provided an apparatus comprising:
at least one processor; and
at least one memory including computer program code;
the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function

### BRIEF DESCRIPTION

Some examples will now be described with reference to the accompanying drawings in which:
FIGS. 1A to 1C show a head up display;
FIG. 2 shows an apparatus;
FIGS. 3A to 3C show a head up display;
FIGS. 4A to 4C show a head up display;
FIGS. 5A to 5C show a head up display;
FIGS. 6A to 6F show a head up display;
FIG. 7 shows a module for adjusting curvature of one or more items of the apparatus;
FIGS. 8A to 8C show a console;
FIGS. 9A to 9C show a console;
FIG. 10 shows a virtual reality display;
FIG. 11 shows an augmented reality display;
FIGS. 12A to 12F show example layouts for a light guide; and
FIG. 13 shows an example optical path.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

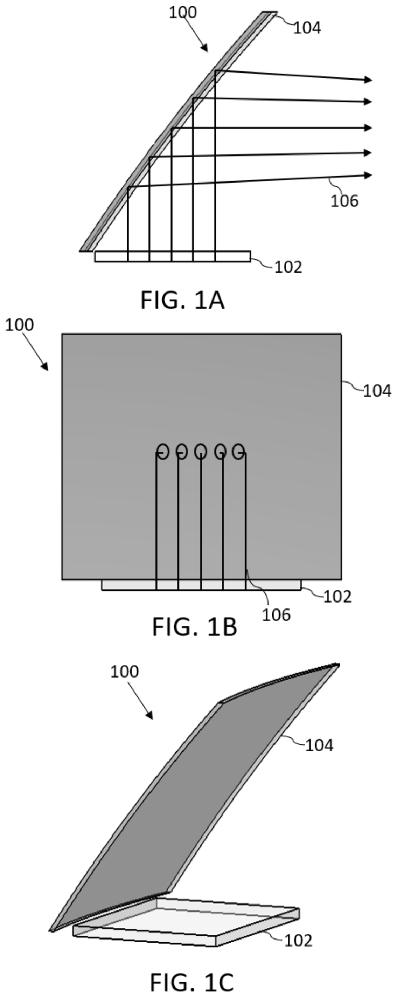

Figs. 1A to 1C show a head up display (HUD) 100 that could be used in vehicles or other devices. Fig. 1A shows a side view, Fig. 1B shows a front view, and Fig. 1C shows a perspective view.

The HUD 100 comprises a light guide 102 and a windshield 104. The HUD 100 can also comprise other components that are not shown in Figs. 1A to 1C. For example the HUD 100 can comprise an image source. The image source can be configured to provide an input beam to the light guide 102.

The light guide 102 is configured to receive an input beam of light and provide an expanded output beam of light. The light guide 102 is positioned so that the output beam of light from the light guide 102 is reflected from the windshield 104 towards a user.

In the example of Figs. 1A to 1C the light guide 102 is planar but the windshield 104 is curved. The output beam of light from the light guide 102 can comprise collimated beams of light.

The windshield 104 is curved and so has optical power. The curvature of the windshield 104 can be in two dimensions. This can provide optical power in two different axes. The curvature of the windshield 104 can be asymmetrical and not constant across the windshield 104.

In this example the curvature of the windshield 104 is problematic for the HUD 100 because the optical power of the windshield 104 causes the output of the HUD 100 to comprise diverging beams 106. A user of this HUD 100 would observe a distorted virtual image with a negative focus or focus beyond infinity. There may also be disparity between the vertical and horizontal axes depending on the curvature of the windshield 104. There may also be binocular differences for the user between the observed left and right eye virtual images. For example, there may be vertical disparity between the observed left and right eye virtual images, reducing the comfort of viewing of the virtual images.

Examples of the disclosure provide an apparatus that enables the optical power of the windshield 104 to be accounted for.

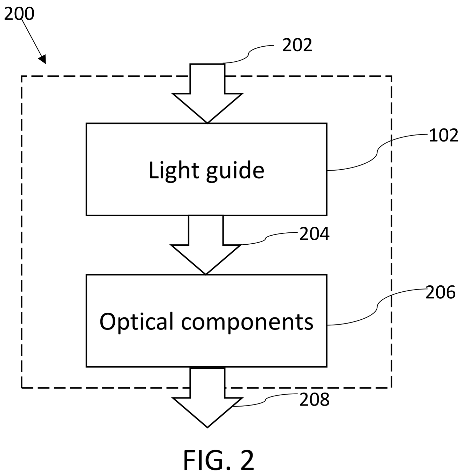

Fig. 2 schematically shows an apparatus 200 according to examples of the disclosure. The apparatus 200 could be used in HUDs 100, consoles, virtual reality displays, augmented reality displays, or any other suitable type of devices. Devices that can comprise the apparatus 200 could be terrestrial vehicles, aquatic vehicles, aerial vehicles or any other suitable devices. The devices could be any device that makes use of a windshield 104.

The apparatus 200 comprises a light guide 102 and one or more optical components 206. Only the items of the apparatus 200 that are referred to in the following description are shown in Fig. 2. However, the apparatus 200 could comprise other items that are not shown in Fig. 2.

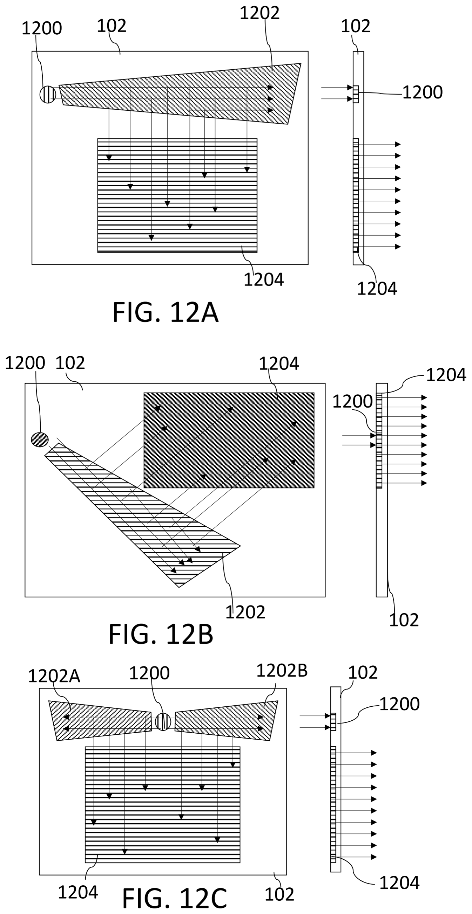

The light guide 102 is configured to receive an input beam of light 202 and provide an expanded output beam of light 204. The light guide 102 can comprise in-coupling diffractive means configured to in-couple one or more input beams of light 202 into the light guide 102, expanding diffractive means configured to expand the one or more input beams of light 202, and out-coupling diffractive means configured to out-couple the one or more beams of light from the light guide 102 to provide an expanded output beam of light 204. Figs. 12A to 12F show some example layouts for the respective diffractive means that can be used in examples of the disclosure.

The one or more optical components 206 are configured to adjust the expanded output beam of light 204. When the apparatus 200 is in use the adjusted beam of light 208 from the one or more optical components 206 can be reflected from a windshield 104 or otherwise directed towards a user.

In examples of the disclosure at least two items of the light guide 102 and the one or more optical components 206 are arranged so that a first item has a first optical power in a first axis and a second item has a second optical power in a second axis. The second axis is different to the first axis and the optical powers of the respective items are configured to focus the expanded output beam of light 204.

In examples where the apparatus 200 is for use in a HUD 100 the optical powers of the items in the apparatus 200 can be arranged to compensate for the optical power of the windshield 104. The optical powers of the items in the apparatus 200 can be arranged to compensate for the curvature of the windshield 104. The optical powers of the items can enable a focused image to be reflected from the windshield 104. In some examples the image can be collimated and therefore focused at infinity. In other examples the image can be focused at a different distance.

The first optical power can be provided by at least one curved surface of a first item. The second optical power can be provided by at least one curved surface of the second item. The items can be the light guide 102 and/or the optical components 206.

The at least one curved surface of the first item can be curved around the first axis and the at least one curved surface of the second item can be curved around the second axis different to the first axis. The respective axes can be perpendicular to, or substantially perpendicular to, each other.

In some examples curvature of one or more of the curved surfaces can change across the curved surface. This can provide a curvature that does not have a circular cross section.

In some examples the curvature of one or more of the curved surfaces is consistent across the curved surface. This can provide a curvature that has a circular cross section.

In some examples the first item can comprise a surface with a convex curvature and the second item can comprise a surface with a concave curvature.

The curved items can be any two or more of the light guide 102 and optical components 206. In some examples the light guide 102 is curved or has a curved surface and the one or more optical components comprises a mirror with a curved surface. When the apparatus 200 is used in a HUD 100 the mirror can be configured to adjust the expanded output beam of light 204 and reflect the adjusted beam of light 208 towards a windshield 104.

In some examples the light guide 102 is curved or has a curved surface and the one or more optical components 206 comprise at least one lens with a curved surface. When the apparatus 200 is used in a HUD 100 the at least one lens can be configured to adjust the expanded output beam of light 204 and direct the adjusted beam of light 208 towards a windshield 104.

In examples where the light guide 102 is curved or has a curved surface the diffractive means of the light guide 102 can be configured to account for curvature of the light guide 102. For example, the spacings in the diffractive means can be arranged to account for the curvature of the light guide 102.

In some examples the light guide 102 could be planar or substantially planar. In such examples at least two different optical components 206 with different optical powers are provided. For example, the optical components 206 can comprise a mirror with a curved surface and a lens with a curved surface. The mirror can be arranged to have a first optical power in a first axis and the lens can be arranged to have a second optical power in a second axis.

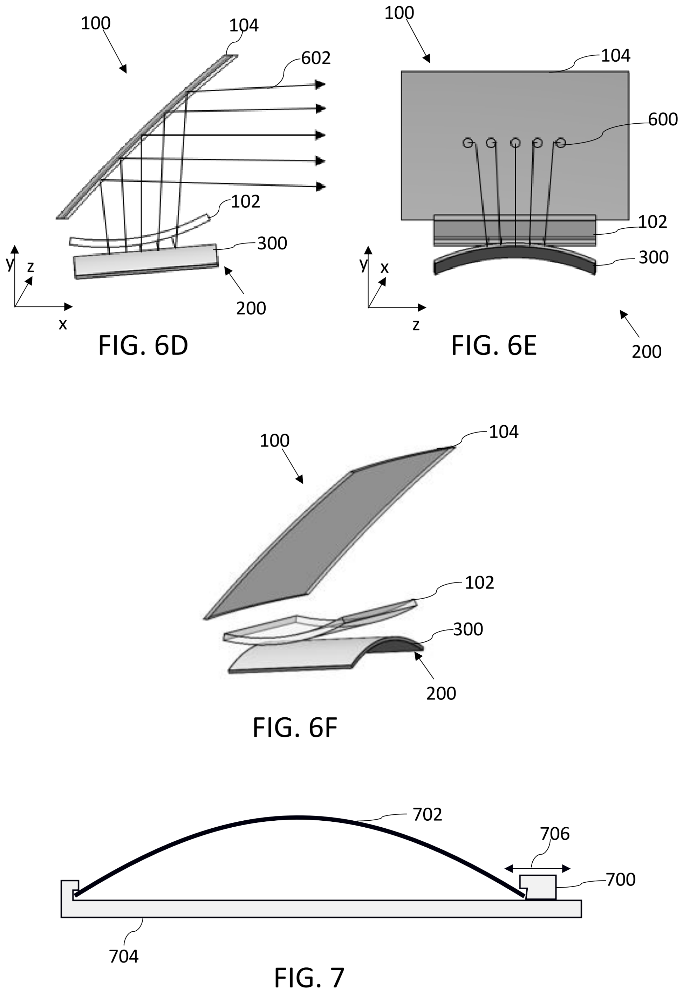

In some examples the curvature of one or more of the items could be adjustable. In such examples the apparatus 200 could comprise an adjustment module configured to enable adjustment of the curvature of the light guide 102 or one or more optical components 206. An example of an adjustment module is shown in Fig. 7.

In examples of the disclosure the items of the optical apparatus that adjust the beam of light only need to provide optical power in one dimension or axis. The design and manufacturing of such items is simpler compared to the design and manufacturing or analogous items that provide optical power in two dimensions or axes. This is particularly the case for the light guide 102 where any curvature would affect the diffractive means.

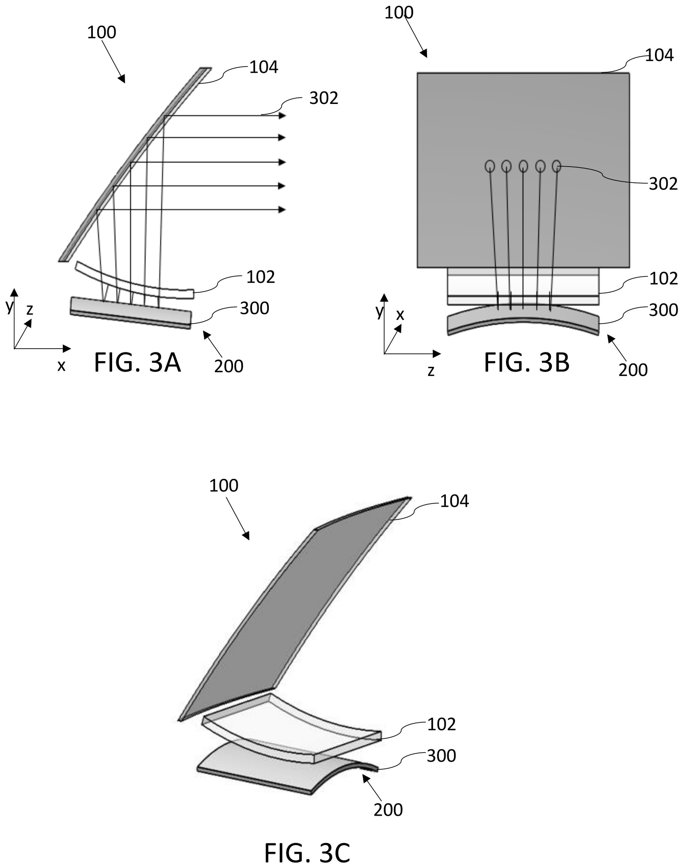

Figs. 3A to 3C show a HUD 100 comprising an apparatus 200 in according to examples of the disclosure. The HUD 100 could be used in vehicles or other devices. Fig. 3A shows a side view, Fig. 3B shows a front view, and Fig. 3C shows a perspective view.

The apparatus 200 comprises a light guide 102 and a mirror 300. The light guide 102 is configured to receive an input beam of light and provide an expanded output beam of light. The light guide 102 is positioned so that the output beam of light from the light guide 102 is directed towards the mirror 300. The light guide 102 can comprise diffractive means that are not shown in Figs. 3A to 3C.

In the example of Figs. 3A to 3C the light guide 102 is curved. The light guide 102 can be curved around the z axis (as shown in Figs. 3A to 3C) or an axis that extends, at least partially, in the z direction. In the example of Figs. 3A to 3C the light guide 102 has cylindrical curvature. Other types of curvature can be used in other examples.

The curvature of the light guide 102 provides an optical power for the light guide 102. The curvature can provide an optical power in a first axis. This can focus the light in the first axis. The first axis can be parallel to, or substantially parallel to, the axis around which the light guide 102 is curved. The light guide 102 therefore provides a first item that has a first optical power in a first axis.

The light guide 102 is only curved about one axis so the optical power is only provided in one axis. The curvature of the light guide 102 can be constant or can change across the surface of the light guide 102. The curvature that is used for the light guide 102 can be determined by the curvature of the windshield 102, the desired focus distance for the HUD 100, and/or any other suitable factors.

The output beam of light from the light guide 102 is directed towards the mirror 300. The mirror 300 can be curved around the x axis (as shown in Figs. 3A to 3C) or an axis that extends, at least partially, in the x direction. In the example of Figs. 3A to 3C the mirror 300 has convex curvature. In the example of Figs. 3A to 3C the mirror 300 has cylindrical curvature. Other types of curvature can be used in other examples.

The curvature of the mirror 300 provides an optical power for the mirror 300. The curvature can provide an optical power in a second axis. This can focus the light in the second axis. The second axis can be parallel to, or substantially parallel to, the axis around which the mirror 300 is curved. The mirror 300 therefore provides a second item that has a second optical power in a second axis.

The light reflected from the mirror 300 is directed towards the windshield 104. The windshield 104 is curved and so has optical power. The windshield 104 is curved in two dimensions and so provides optical power in two different axes. The curvature of the windshield 104 can be asymmetrical and not constant across the windshield 104.

The curved surfaces of the items of the apparatus 200 can be arranged so as to enable the items in the apparatus 200 to account for the optical power of the windshield 104. For example, the radius of curvatures, any changes in curvature across the surface, the orientation of the axis of curvature, or any other relevant factors can be arranged to account for the optical power of the windshield 104. This can enable the expanded output beam of light to be focused.

In the example of Figs. 3A to 3C the output of the HUD 100 comprises collimated beams 302. A user of this HUD 100 would observe an image focused at infinity. The images could be focused to different distances in other examples. The user would also observe an image with reduced binocular differences. For example, the amount of vertical disparity between the observed left and right eye virtual images would be reduced, increasing the comfort of viewing of the virtual images.

In the example of Figs. 3A to 3C the light guide 102 is tilted relative to the mirror 300. The light guide 102 could be tilted at an angle of 10º or substantially 10º or any other suitable angle. The tilting reduces the effects of ghost images which can be caused by light that is outcoupled from the light guide 102 in the opposing direction to the mirror 300. In this example the ghost images would be caused by light that is outcoupled in an upwards direction. This tilting of the light guide 102 might increase the volume of the apparatus 200 but could provide improved image quality.

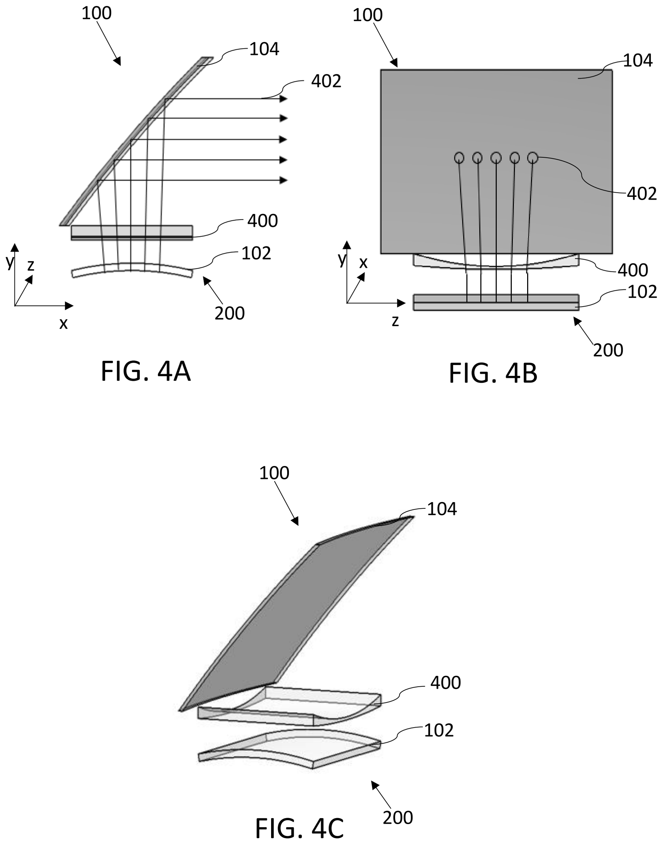

Figs. 4A to 4C show a HUD 100 comprising another apparatus 200 according to examples of the disclosure. The HUD 100 could be used in vehicles or other devices. Fig. 4A shows a side view, Fig. 4B shows a front view, and Fig. 4C shows a perspective view.

In this example the apparatus 200 comprises a light guide 102 and a lens 400. The light guide 102 is configured to receive an input beam of light and provide an expanded output beam of light. The light guide 102 is positioned so that the output beam of light from the light guide 102 is directed towards the lens 400. The light guide 102 can comprise diffractive means that are not shown in Figs. 4A to 4C.

In the example of Figs. 4A to 4C the light guide 102 is curved. The light guide 102 can be curved around the z axis (as shown in Figs. 4A to 4C) or an axis that extends, at least partially, in the z direction. In the example of Figs. 4A to 4C the light guide 102 has cylindrical curvature. Other types of curvature can be used in other examples.

The curvature of the light guide 102 provides an optical power for the light guide 102. The curvature can provide an optical power in a first axis. This can focus the light in the first axis. The first axis can be parallel to, or substantially parallel to, the axis around which the light guide 102 is curved. The light guide 102 therefore provides a first item that has a first optical power in a first axis.

The light guide 102 is only curved about one axis so the optical power is only provided in one axis. The curvature of the light guide can be constant or can change across the surface of the light guide 102. The curvature that is used for the light guide 102 can be determined by the curvature of the windshield 104, the desired focus distance for the HUD 100, and/or any other suitable factors.

The output beam of light from the light guide 102 is directed towards the lens 400. The lens 400 can be curved around the x axis (as shown in Figs. 4A to 4C) or an axis that extends, at least partially, in the x direction. In the example of Figs. 4A to 4C the lens 400 has cylindrical curvature. Other types of curvature can be used in other examples.

The curvature of the lens 400 provides an optical power for the lens 400. The curvature can provide an optical power in a second axis. This can focus the light in the second axis. The second axis can be parallel to, or substantially parallel to, the axis around which the lens 400 is curved. The lens 400 therefore provides a second item that has a second optical power in a second axis.

The lens 400 is arranged to direct the adjusted beam of light towards the windshield 104. The windshield 104 is curved and so has optical power. The windshield 104 is curved in two dimensions and so provides optical power in two different axes. The curvature of the windshield 104 can be asymmetrical and not constant across the windshield 104.

The curved surfaces of the items of the apparatus 200 can be arranged so as to enable the items in the apparatus 200 to account for the optical power of the windshield 104. For example, the radius of curvatures, any changes in curvature across the surface, the orientation of the axis of curvature, or any other relevant factors can be arranged to account for the optical power of the windshield 104. This can enable the expanded output beam of light to be focused.

In the example of Figs. 4A to 4C the output of the HUD 100 comprises collimated beams 402. A user of this HUD 100 would observe an image focused at infinity. The images could be focused to different distances in other examples.

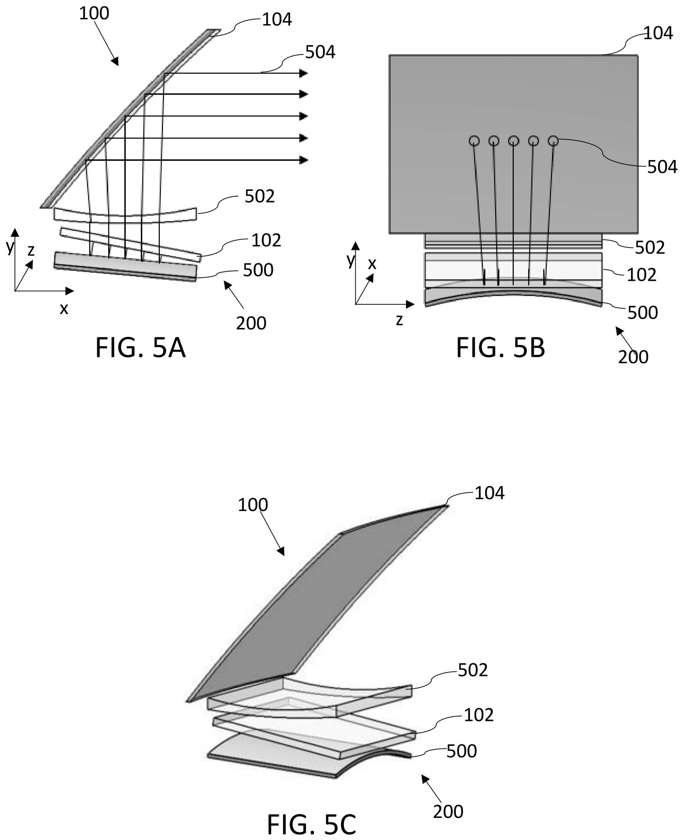

Figs. 5A to 5C show a HUD 100 comprising another apparatus 200 according to examples of the disclosure. The HUD 100 that could be used in vehicles or other devices. Fig. 5A shows a side view, Fig. 5B shows a front view, and Fig. 5C shows a perspective view.

In this example the apparatus 200 comprises a light guide 102, a mirror 500 and a lens 502. The light guide 102 is configured to receive an input beam of light and provide an expanded output beam of light. The light guide 102 is positioned so that the output beam of light from the light guide 102 is directed towards the mirror 500.

In the example of Figs. 5A to 5C the light guide 102 is planar or substantially planar. The light guide 102 does not have any optical power so it does not provide any focusing of the output beam of light.

The output beam of light from the light guide 102 is directed towards the mirror 500. The mirror 500 can be curved around the x axis (as shown in Figs. 5A to 5C) or an axis that extends, at least partially, in the x direction. In the example of Figs. 5A to 5C the mirror 500 has convex curvature. In the example of Figs. 5A to 5C the mirror 500 has cylindrical curvature. Other types of curvature can be used in other examples.

The curvature of the mirror 500 provides an optical power for the mirror 500. The curvature can provide an optical power in a first axis. This can focus the light in the first axis. The first axis can be parallel to, or substantially parallel to, the axis around which the mirror 500 is curved. The mirror 500 therefore provides a first item that has a first optical power in a first axis.

The light reflected from the mirror 500 is directed towards the lens 502. The lens 502 can be curved around the z axis (as shown in Figs. 5A to 5C) or an axis that extends, at least partially, in the z direction. In the example of Figs. 5A to 5C the lens 502 has cylindrical curvature. Other types of curvature can be used in other examples.

The curvature of the lens 502 provides an optical power for the lens 502. The curvature can provide an optical power in a second axis. This can focus the light in the second axis. The second axis can be parallel to, or substantially parallel with the axis around which the lens 502 is curved. The lens 502 therefore provides a second item that has a second optical power in a second axis.

The lens 502 is arranged to direct the adjusted beam of light towards the windshield 104. The windshield 104 is curved and so has optical power. The windshield 104 is curved in two dimensions and so provides optical power in two different axes. The curvature of the windshield 104 can be asymmetrical and not constant across the windshield 104.

The curved surfaces of the items of the apparatus 200 can be arranged so as to enable the items in the apparatus 200 to account for the optical power of the windshield 104. For example, the radius of curvatures, any changes in curvature across the surface, the orientation of the axis of curvature, or any other relevant factors can be arranged to account for the optical power of the windshield 104. This can enable the expanded output beam of light to be focused.

In the example of Figs. 5A to 5C the output of the HUD 100 comprises collimated beams 504. A user of this HUD 100 would observe an image focused at infinity. The images could be focused to different distances in other examples.

In the example of Figs. 4A to 5C the optical power of the lenses 400, 502 is achieved through the curvature of at least one surface of the respective lenses 400, 502. Other means for achieving the optical power could be used in other examples such as Fresnel lenses, micro lenses, metasurface optic elements or any other suitable means.

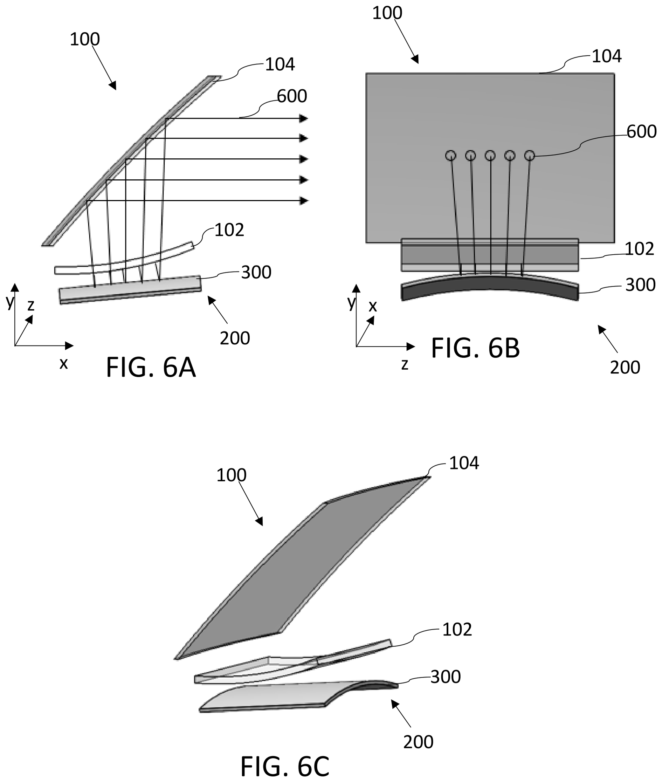

Figs. 6A to 6F shows a HUD 100 in which the optical power of one or more of the items can be adjusted. In this example the apparatus 200 comprises a light guide 102 and a mirror 300 which can be arranged similar to the light guide 102 and mirror 300 shown in Figs. 3A to 3C. However in this case the curvature of the respective items can be adjusted.

Figs. 6A to 6C show the apparatus 200 in a first configuration. Fig. 6A shows a side view, Fig. 6B shows a front view, and Fig. 6C shows a perspective view. In the first configuration the light guide 102 has a first radius of curvature and the mirror 300 has a second radius of curvature. The radius of curvature of the mirror 300 and the light guide 102 can be selected so that output of the HUD 100 comprises collimated beams 600. The radius of curvature of the mirror 300 and the light guide 102 don't need to be the same as each other. That is, the radius of curvature of the mirror 300 can be different to the radius of curvature of the light guide 102.

Figs. 6D to 6F show the apparatus 200 in a second configuration. Fig. 6D shows a side view, Fig. 6E shows a front view, and Fig. 6F shows a perspective view. In the second configuration the curvature of the light guide 102 and the mirror 200 have been adjusted. In the second configuration the light guide 102 has a third radius of curvature. The third radius of curvature is different to the first radius of curvature. The mirror 300 has a fourth radius of curvature. The fourth radius of curvature is different to the second radius of curvature. The new radius of curvature of the mirror 300 and the light guide 102 can be selected so that, in the second configuration, the output of the HUD 100 comprises converging focused beams 602. The radius of curvature of the mirror 300 and the light guide 102 don't need to be the same as each other. That is, the radius of curvature of the mirror 300 can be different to the radius of curvature of the light guide 102.

In the example of Figs. 6A to 6F the curvature of both the mirror 300 and the light guide 102 are adjusted. In some examples the curvature of just one of the mirror 300 or the light guide 102 could be adjusted.

In the example of Figs. 6A to 6F the apparatus 200 comprises an adjustable mirror 300 and an adjustable light guide 102. In other arrangements the apparatus 200 could comprise an adjustable lens 400 and/or light guide 102 which could be arranged similar to those shown in Figs. 4A to 4C. In other arrangements the apparatus 200 could comprise an adjustable lens 502 and/or mirror 500 and/or light guide 102 which could be arranged similar to those shown in Figs. 5A to 5C.

The adjustable items of the apparatus 200 can be made of any suitable flexible materials, such as plastic, to enable them to be bent or otherwise adjusted. The apparatus 200 can comprise an adjustment module that can be configured to enable adjustment of the curvature of the light guide 102 or one or more optical components 206. An example of an adjustment module is shown in Fig. 7.

Having one or more adjustable items within the apparatus 200 can enable the focus distance of the virtual image provided by the apparatus 200 to be adjusted. This adjustment could be used to match a convergence or focus distance of a displayed augmented reality object with a real-world object. For instance, if a vehicle is approaching a hazard such as a pedestrian the apparatus 200 could be arranged to provide warning sign that has a convergence or focus distance that matches, or substantially matches, the relative position and distance of the hazard.

In other examples the items of the apparatus 200 could be adjusted when the apparatus 200 is installed within a device such as a vehicle. This could enable generic apparatus 200 to be manufactured and then adjusted for use with specific windscreens or vehicles.

Fig. 7 shows a module 700 for adjusting curvature of one or more items of the apparatus 200. The module 700 can be used to adjust the curvature of an item 702. The item 702 could be a light guide 102 or an optical component 206 such as a mirror 300, 500 or lens 400, 502. The item 702 could be as shown in any of Figs. 3A to 6F or could be any other suitable apparatus.

The item 702 is attached to a frame 704 and an adjustment module 700 is coupled to a first end of the item 702. The adjustment module 702 can comprise an electroactive polymer, a step motor, electromechanical motors or any other suitable means that can be used to move the first end of the item 702. The second end of the item 702 can be fixed in position so that movement of the first end of the item 702 changes the radius of curvature of the item 702.

If the item 702 that is adjusted is a light guide 102 then, depending on the thickness of the light guide 102, the adjustment could affect the periods of the diffractive means. For example, it could reduce or increase some of the grating periods. Any changes in the grating periods could be compensated for by other adjustments such as changing the wavelengths in the input beam of light or changing the displayed contents or changing the focusing of the input beam.

Fig. 7 shows an example adjustment module 700 for making a mechanical adjustment. Other types of adjustments, such as electrical adjustments, could be made in other examples. For instance, the item 702 that is to be adjusted could comprise an electrically tunable lens and the optical power of the lens could be electrically adjusted.

In the examples of Figs. 3A to 7 the apparatus 200 all comprise items that are symmetrical in one dimension so the curvature is cylindrical. Other curvatures can be used in other examples. Similarly the curvature of windshield 104 is shown as being symmetrical about two axes but this does not need to be the case.

Also in the examples of Figs. 3A to 7 the apparatus 200 is located in a central or substantially central position of the windshield 104. In implementations of the disclosure the apparatus 200 can be located in an off-center position, for example, it can be located towards the left-hand side or the right-hand side. The windshield 104 could also be essentially larger than the apparatus 200.

The apparatus 200 and/or the items within the apparatus 200 can be positioned and/or rotated and/or tilted so that the adjusted beam of light is reflected from the windshield 104 towards a user.

The axis in which the respective items provide an optical power do not need to be as shown in Figs. 3A to 7. For instance, in Figs. 3A to 3C the mirror could be curved around the z axis and the light guide 102 could be curved around the x axis. Or in some cases other axes could be used.

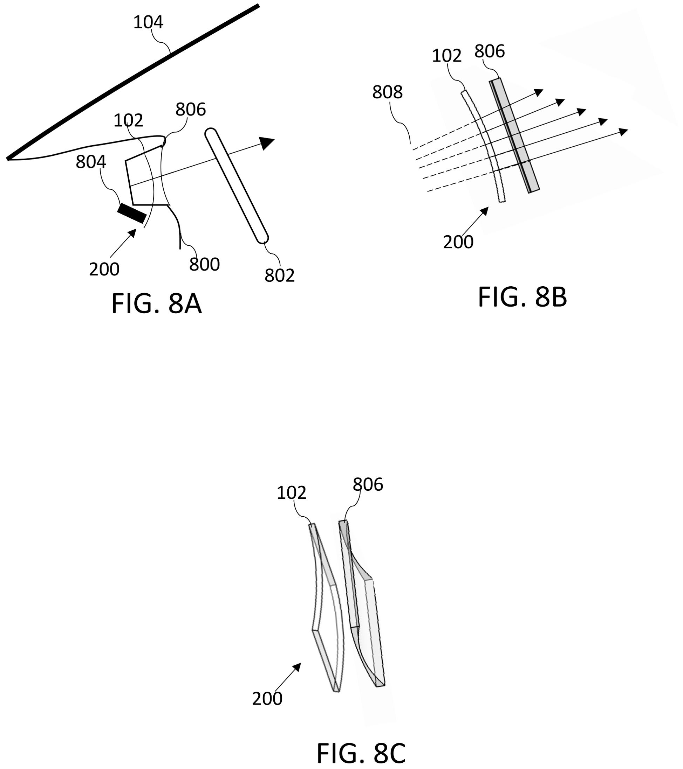

Figs. 8A to 8C shows a console 800 that could comprise apparatus 200 according to examples of the disclosure. The console 800 could be used in vehicles or other devices. Fig. 8A shows a console 800 comprising an apparatus, Fig. 8B shows a side view of an example apparatus 200 that can be used in the console 800, and Fig. 8C shows a perspective view of the apparatus 200.

The console 800 can be positioned behind a steering wheel 802 and below the windshield 104 of the vehicle. The apparatus 200 in the console 800 can be arranged to provide augmented or virtual reality images to a user. The images could provide warnings to the driver of the vehicle, could provide information relating to the operation of the vehicle or could provide any other suitable information.

In examples of the disclosure the console 800 comprises an image source 804. The image source 804 is configured to provide virtual images 808. The virtual images 808 can comprise the information that is to be presented to the user of the vehicle. The apparatus 200 is positioned relative to the image source 804 so that the virtual images 808 from the image source 804 provide an input for the apparatus 200.

In the examples of Figs. 8A to 8C the apparatus 200 comprises a light guide 102 and a lens 806. The light guide 102 is configured to receive an input beam of light from the image source 804 and provide an expanded output beam of light. The light guide 102 is positioned so that the output beam of light from the light guide 102 is directed towards the lens 806. The light guide 102 can comprise diffractive means that are not shown in Figs. 8A to 8C.

In the example of Figs. 8A to 8C the light guide 102 is curved. The light guide 102 can be curved around any suitable axis. In the example of Figs. 8A to 8C the light guide 102 has cylindrical curvature. Other types of curvature can be used in other examples.

The curvature of the light guide 102 provides an optical power for the light guide 102. The curvature can provide an optical power in a first axis. This can focus the light in the first axis. The first axis can be parallel to, or substantially parallel to, the axis around which the light guide 102 is curved. The light guide 102 therefore provides a first item that has a first optical power in a first axis.

The light guide 102 is only curved about one axis so the optical power is only provided in one axis. The curvature of the light guide 102 can be constant or can change across the surface of the light guide 102. The curvature that is used for the light guide 102 can be determined by the desired focus distance for the console 800, and/or any other suitable factor.

The output beam of light from the light guide 102 is directed towards the lens 806. The lens 806 can be curved around a different axis to the light guide 102. In the example of Figs. 8A to 8C the lens 806 can be curved around an axis that is perpendicular to, or substantially perpendicular to, the axis around which the light guide 102 is curved. In the example of Figs. 8A to 8C the lens 806 has cylindrical curvature. Other types of curvature can be used in other examples.

The curvature of the lens 806 provides an optical power for the lens 806. The curvature can provide an optical power in a second axis. This can focus the light in the second axis. The second axis can be parallel to, or substantially parallel to, the axis around which the lens 806 is curved. The lens 806 therefore provides a second item that has a second optical power in a second axis.

The respective items of the apparatus 200 therefore focus the virtual images 808 from the image source 802 in respective axis or dimensions. This can enable the virtual images 804 to be focused at a suitable distance for the user of the vehicle.

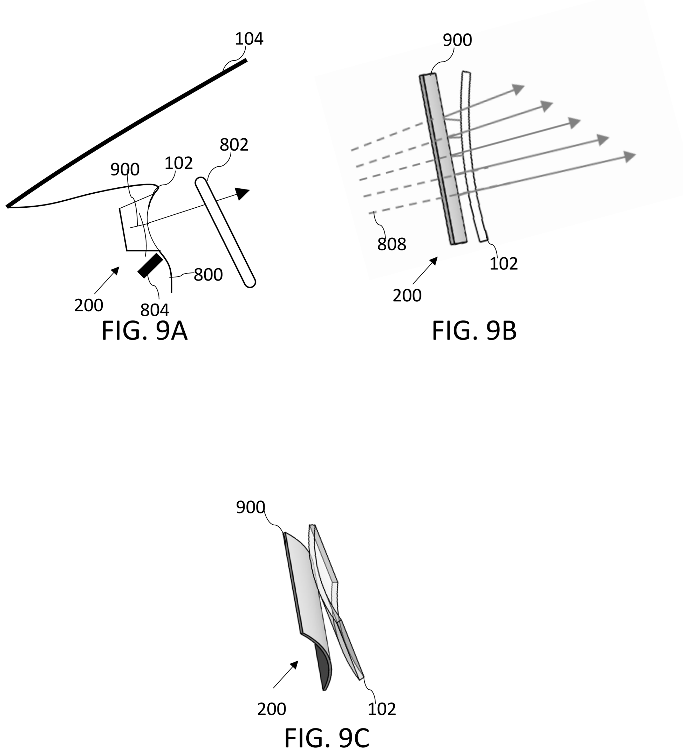

Figs. 9A to 9C shows a console 800 that could comprise another apparatus 200 according to examples of the disclosure. The console 800 could be used in vehicles or other devices. Fig. 9A shows a console 800 comprising an apparatus, Fig. 9B shows a side view of an example apparatus 200 that can be used in the console 800, and Fig. 9C shows a perspective view of the apparatus 200.

The console 800 can be positioned in a vehicle similar to the console 800 shown in Fig. 8A and can also be arranged to provide augmented or virtual reality images to a user. The images could provide warnings to the driver of the vehicle, could provide information relating to the operation of the vehicle or could provide any other suitable information.

The console 800 in the examples of Figs. 9A to 9C also comprises an image source 804. The image source 804 is configured to provide virtual images 808. The virtual images 808 can comprise the information that is to be presented to the user of the vehicle. The apparatus 200 is positioned relative to the image source 804 so that the virtual images 808 from the image source 804 provide an input for the apparatus 200.

In the example of Figs. 9A to 9C the apparatus 200 comprises a light guide 102 and a mirror 900. The light guide 102 is configured to receive an input beam of light from the image source 804 and provide an expanded output beam of light. The light guide 102 is positioned so that the output beam of light from the light guide 102 is directed towards the mirror. The light guide 102 can comprise diffractive means that are not shown in Figs. 9A to 9C.

In the example of Figs. 9A to 9C the light guide 102 is curved. The light guide 102 can be curved around any suitable axis. In the example of Figs. 9A to 9C the light guide 102 has cylindrical curvature. Other types of curvature can be used in other examples.

The curvature of the light guide 102 provides an optical power for the light guide 102. The curvature can provide an optical power in a first axis. This can focus the light in the first axis. The first axis can be parallel to, or substantially parallel to, the axis around which the light guide 102 is curved. The light guide 102 therefore provides a first item that has a first optical power in a first axis.

The light guide 102 is only curved about one axis so the optical power is only provided in one axis. The curvature of the light guide 102 can be constant or can change across the surface of the light guide 102. The curvature that is used for the light guide 102 can be determined by the desired focus distance for the console 800, and/or any other suitable factor.

The output beam of light from the light guide 102 is directed towards the mirror 900. The mirror 900 can be curved around a different axis to the light guide 102. In the example of Figs. 9A to 9C the mirror 900 can be curved around an axis that is perpendicular to, or substantially perpendicular to, the axis around which the light guide 102 is curved. In the example of Figs. 9A to 9C the mirror 900 has cylindrical curvature. Other types of curvature can be used in other examples.

The curvature of the mirror 900 provides an optical power for the mirror 900. The curvature can provide an optical power in a second axis. This can focus the light in the second axis. The second axis can be parallel to, or substantially parallel to, the axis around which the mirror 900 is curved. The mirror 900 therefore provides a second item that has a second optical power in a second axis.

The mirror 900 can be tilted relative to the light guide 102 so as to avoid ghost images that can arise from light outcoupling from the light guide 102 on the opposite side to the mirror 900.

The examples shown in Fig. 8A to 9C can enable curved surfaces to be used for the console 800. This can give more design freedom for the console 800 and can be used to improve the aesthetics of the console 800. The example apparatus 200 can enable a close focus to be provided for a large exit pupil or eyebox size.

The respective items of the apparatus 200 focus the virtual images 808 from the image source 804 in respective axis or dimensions. This can enable the virtual images 808 to be focused at a suitable distance for the user of the vehicle.

In some examples one or more of the items of the apparatus 200 shown in Figs. 8A to 9C could be adjustable so that the optical power of one or more of the items could be adjusted. For instance, an adjustment module such as the module 700 shown in Fig. 7 could be used to adjust the curvature of one or more of the items. Other means could be used in other examples of the disclosure. Adjusting the optical power of the items could enable the focus distance to be adjusted for the user's eyesight, or the position of any objects or hazards or for any other suitable purpose.

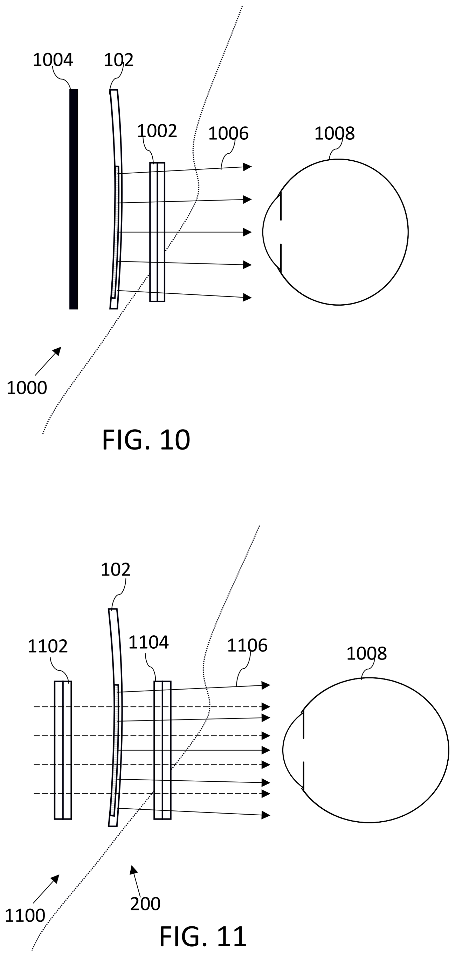

Fig. 10 shows a virtual reality display 1000 comprising another apparatus 200 according to examples of the disclosure. The virtual reality display 1000 could be provided in a wearable device such as a headset or any other suitable type of device.

In Fig. 10 the virtual reality display 1000 comprises a light guide 102 and a lens 1002. The light guide 102 is configured to receive a beam of light from an image source as an input and provide an expanded output beam of light. In this example the light guide 102 and the lens 1002 are both curved. The light guide 102 is curved around a different axes to the lens 1002. The light guide 102 and the lens 1002 provide optical powers in different axes.

The light guide 102 can be curved around any suitable axis. In the example of Fig. 10 the light guide 102 can have cylindrical curvature. Other types of curvature can be used in other examples.

The curvature of the light guide 102 provides an optical power for the light guide 102. The curvature can provide an optical power in a first axis. This can focus the light in the first axis. The first axis can be parallel to, or substantially parallel to, the axis around which the light guide 102 is curved. The light guide 102 therefore provides a first item that has a first optical power in a first axis.

The light guide 102 is only curved about one axis so the optical power is only provided in one axis. The curvature of the light guide 102 can be constant or can change across the surface of the light guide 102. The curvature that is used for the light guide 102 can be determined by the desired focus distance for the virtual reality display 1000 and/or any other suitable factor.

The output beam of light from the light guide 102 is directed towards the lens 1002. The lens 1002 can be curved around a different axis to the light guide 102. In the example of Fig. 10 the lens 1002 can be curved around an axis that is perpendicular to, or substantially perpendicular to, the axis around which the light guide 102 is curved. In the example of Fig.10 the lens 1002 has cylindrical curvature. Other types of curvature can be used in other examples.

The curvature of the lens 1002 provides an optical power for the lens 1002. The curvature can provide an optical power in a second axis. This can focus the light in the second axis. The second axis can be parallel to, or substantially parallel to, the axis around which the lens 1002. The lens 1002 therefore provides a second item that has a second optical power in a second axis.

The optical powers of the light guide 102 and the lens 1002focus the virtual reality images so as to provide near focused images. The user observes virtual images that are focused closer than infinity.

In Fig.10 the virtual reality display 1000 also comprises a block 1004. The block 1004 is arranged behind the light guide 102 to block external images from the virtual reality display.

In the example of Fig. 10 the apparatus 200 comprises the lens 1002to provide the optical power in one direction. In other examples the virtual reality display 1000 could comprise a mirror or other similar optical component. This could be positioned between the block 1004 and the light guide 102.

Fig. 11shows an augmented reality display 1110 that could comprise another apparatus 200 according to examples of the disclosure. The augmented reality display 1100 could be provided in a wearable device such as a headset or any other suitable type of device.

In Fig. 11 the augmented reality display 1100 comprises a light guide 102 and a first lens 1102 and a second lens 1104. The light guide 102 is configured to receive a beam of light from an image source as an input and provide an expanded output beam of light. The first lens 1102 is positioned behind the light guide 102 and can be used to focus real images to account for any adjustments of the real image by the second lens 1104. The second lens 1104 is positioned in front of the light guide 102. The second lens 1104 is positioned between the light guide 102 and the user's eye 1008. The second lens 1104 can adjust the virtual images from the light guide 102.

In Fig. 11 the virtual reality display 1100 comprises a curved light guide 102. The light guide 102 can be curved around any suitable axis. In the example of Fig. 11 the light guide 102 can have cylindrical curvature. Other types of curvature can be used in other examples.

The curvature of the light guide 102 provides an optical power for the light guide 102. The curvature can provide an optical power in a first axis. This can focus the light in the first axis. The first axis can be parallel to, or substantially parallel to, the axis around which the light guide 102 is curved. The light guide 102 therefore provides a first item that has a first optical power in a first axis.

The light guide 102 is only curved about one axis so the optical power is only provided in one axis. The curvature of the light guide 102 can be constant or can change across the surface of the light guide 102. The curvature that is used for the light guide 102 can be determined by the desired focus distance for the virtual reality display 1100 and/or any other suitable factor.

The output beam of light from the light guide 102 is directed towards the second lens 1104. The second lens 1104 can be curved around a different axis to the light guide 102. In the example of Fig. 11 the second lens 1104 can be curved around an axis that is perpendicular to, or substantially perpendicular to, the axis around which the light guide 102 is curved. In the example of Fig.11 the second lens 1104 has cylindrical curvature. Other types of curvature can be used in other examples.

The curvature of the second lens 1104 provides an optical power for the second lens 1104. The curvature can provide an optical power in a second axis. This can focus the light in the second axis. The second axis can be parallel to, or substantially parallel to, the axis around which the second lens 1104 is curved. The second lens 1104therefore provides a second item that has a second optical power in a second axis.

The first lens 1102 can also be curved so as to adjust real world images to compensate for the optical power of the second lens 1104.

The optical powers of the light guide 102 and the second lens 1104focus the virtual reality images so as to provide near focused images. The user observes virtual images that are focused closer than infinity.

In some examples one or more of the items of the apparatus 200 shown in Figs. 10 and 11 could be adjustable so that the optical power of one or more of the items could be adjusted. For instance, an adjustment module such as the module 700 shown in Fig. 7 could be used to adjust the curvature of the light guide 102 or the other optical components. Other means could be used in other examples of the disclosure. Adjusting the optical power of the items could enable the focus distance to be adjusted for the user's eyesight, or the position of any objects or hazards or for any other suitable purpose.

Figs. 12A to 12F show example layouts of respective diffractive means for a light guide 102. The respective light guides 102 comprise in-coupling diffractive means 1200, expanding diffractive means 1202, and out-coupling diffractive means 1204. Each of Figs. 12A to 12F show a plan view of a light guide 102 and a cross section of the light guide 102. The light guides 102 can comprise other components that are not shown in Figs. 12A to 12F.

The in-coupling diffractive means 1200 comprises any means that is configured to in-couple one or more input beams of light into the light guide 102. The input beams of light can be provided from a light engine or any other suitable source. The light guide 102 is configured so that the in-coupled beams of light travel inside the light guide 102 via total internal reflection.

The expanding diffractive means 1202 comprise any means that are configured to expand the in-coupled beam of light in at least one dimension. The expanding diffractive means 1202 can comprise a diffractive means such as a diffraction grating or any other suitable means. In the diffraction grating the in-coupled beam of light is split into two with every interaction with the diffraction grating. The interaction could be, for example, an internal reflection. The two split sections of the beam travel in different directions and continue splitting and so expand the in-coupled beams.

The out-coupling diffractive means 1204 is positioned within the light guide 102 so that the expanded beams of light from the expanding diffractive means 1202 are provided to the out-coupling diffractive means 1204. The out-coupling diffractive means 1204 comprises any means that is configured to out-couple the expanded light beam out of the light guide 102. The out-coupling diffractive means 1204 can function in a similar manner to the expanding diffractive means 1202 so that the expanded beam of light is split into two with every interaction with the diffraction grating. In some examples, the out-coupling diffractive means 1204 can also be configured to expand the expanded beam of light. The expansion of the beam of light by the out-coupling diffractive means 1204 can be in a different dimension to the expansion of the beam of light by the expanding diffractive means 1202.

The out-coupled expanded beams of light provide a virtual image that can be observed by a user. The out-coupled beam of light therefore provides an expanded exit pupil.

In the example of Fig. 12A the in-coupling diffractive means 1200 is located towards a first edge of a first surface of the light guide 102. In the example of Fig. 12A the in-coupling diffractive means 1200 has a vertical diffractive grating. Other arrangements for the in-coupling diffractive means 1200 could be used in other examples.

In the example of Fig. 12A the in-coupling diffractive means 1200 has a circular shape. Other shapes could be used for the in-coupling diffractive means 1200 in other examples.

The expanding diffractive means 1202 is provided on a first side of the in-coupling means 1200. The expanding diffractive means 1202 has a shape that increases in width. The narrower edge is positioned closest to the in-coupling diffractive means 1200 and the wider edge is positioned further away from the in-coupling diffractive means 1200. Other shapes could be used for the expanding diffractive means 1202 in other examples.

The out-coupling diffractive means 1204 is positioned underneath the expanding diffractive means 1202. In the example of Fig. 12A the out-coupling diffractive means 1204 has a horizontal diffractive grating. Other arrangements for the out-coupling diffractive means 1204 could be used in other examples.

In the example of Fig. 12A the out-coupling diffractive means 1204 has a rectangular shape. Other shapes could be used for the out-coupling diffractive means 1204 in other examples.

In the example of Fig. 12B, the respective diffractive means 1200, 1202, 1204, have similar shapes to those of Fig. 12A but they are arranged in a different orientation. Other orientations could be used in other examples.

In the example of Fig. 12C the light guide 102 comprises two expanding diffractive means 1202A, 1202B. The expanding diffractive means 1202A, 1202B are arranged in a butterfly configuration around the in-coupling diffractive means 1200.

In the example of Fig. 12C the in-coupling diffractive means 1200 is located in a central position on a first surface of the light guide 102. The first expanding diffractive means 1202A is provided on a first side of the in-coupling diffractive means 1200 and the second expanding diffractive means 1202B is provided on a second side of the in-coupling diffractive means 1200. In the example of Fig. 12C the first expanding diffractive means 1202A is symmetrical to the second expanding diffractive means 1202B. Other arrangements can be used in other examples. The out-coupling diffractive means 1204 is positioned underneath the expanding diffractive means 1202A, 1202B.

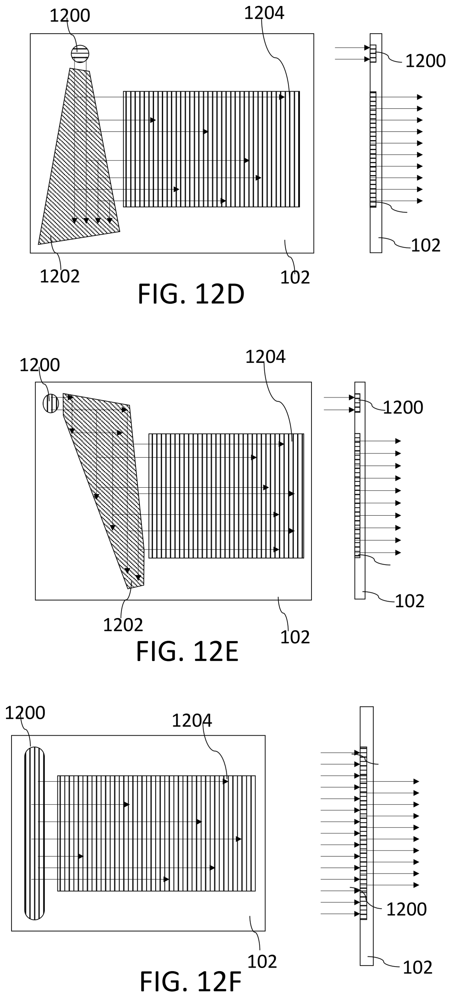

In the example of Fig. 12D, the respective diffractive means 1200, 1202, 1204, have similar shapes to those of Fig. 12A but they are arranged in another different orientation. Other orientations could be used in other examples.

In this example the in-coupling diffractive means 1200 is located towards an upper edge of a first surface of the light guide 102. In the example of Fig. 12C the in-coupling diffractive means 1200 has a horizontal diffractive grating. In the example of Fig. 12C the in-coupling diffractive means 1200 has a circular shape.

The expanding diffractive means 1202 is provided underneath the in-coupling means 1200. The expanding diffractive means 1202 has a shape that increases in width. The narrower edge is positioned closest to the in-coupling diffractive means 1200 and the wider edge is positioned further away from the in-coupling diffractive means 1200. The out-coupling diffractive means 1204 is positioned to the side of the expanding diffractive means 1202. In the example of Fig. 12C the out-coupling diffractive means 1204 has a vertical diffractive grating. In the example of Fig. 12C the out-coupling diffractive means 1204 has a rectangular shape.

In the Example of Fig. 12E the respective diffractive means 1200, 1202, 1024 are arranged similar to the diffractive means 1200, 1202, 1024 in Fig. 12D. However, in this example the expanding diffractive means 1202 is shaped so as to provide a double bounce expander. This can expand the beam of light in two dimensions.

In the example of Fig. 12F the light guide 102 only comprises an in-coupling diffractive means 1200 and an out-coupling diffractive means 1204. The light guide 102 does not comprise an expanding diffractive means 1202. In this example the light is only expanded in one dimension.

In the example of Fig. 12F the in-coupling diffractive means 1200 is located towards a first edge of a first surface of the light guide 102. In the example of Fig. 12F the in-coupling diffractive means 1200 has a vertical diffractive grating. In the example of Fig. 12F the in-coupling diffractive means 1200 has an elongate shape. The out-coupling diffractive means 1204 is positioned to the side of the in-coupling diffractive means 1200. In the example of Fig. 12F the out-coupling diffractive means 1204 has a vertical diffractive grating and a rectangular shape.

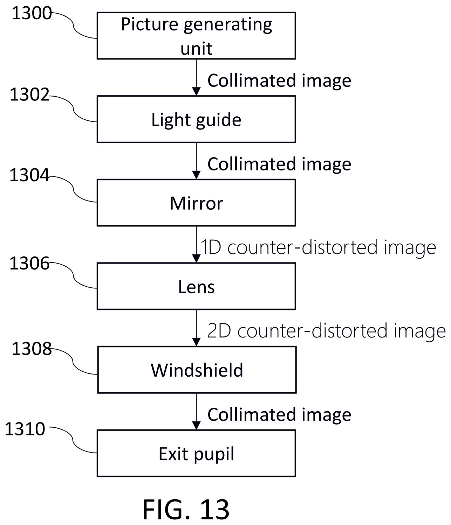

Fig. 13 shows an example optical path that could be used in examples of the disclosure. The example optical path could be used in example apparatus 200 such as the apparatus 200 shown in Figs 5A to 5C that comprises a planar light guide 102 and a curved mirror 500 and a curved lens 502.

At block 1300 the light is emitted from a picture generating unit, optical engine, or any other suitable light source. The picture generating unit can provide virtual images or any other suitable inputs. The picture generating unit can provide a collimated image.

At block 1302 the input beam of light from the picture generating unit is coupled in to the light guide 102. The light guide 102 expands the input and provides an expanded output image. The expanded output image in this example is also a collimated image.

At block 1304 the light from the light guide 102 is reflected from the curved mirror 500. The mirror 500 is curved in one axis so as to counter distort the collimated image in one dimension. The mirror 500 therefore provides an image that is counter distorted in one dimension.

At block 1306 the light from the mirror 500 is adjusted by the curved lens 502. The lens 502 is curved in one axis so as to counter distort the collimated image in one dimension. The lens 502 distorts the image in a different dimension to the which the mirror 500 distorts the image. The lens 502 therefore provides an image that is counter distorted in two dimensions.

At block 1308, light from the lens 502 in incident on the windshield 104. The windshield 104 distorts the image in both the first dimension and the second dimension so that the output reflected from the windshield 104 is a collimated image. The collimated image provides the exit pupil of the HUD 100 at block 1310.

In other examples, the picture generating unit could provide virtual images with focus distance optimized for the light guide 1302 curvature. For example, for a light guide 1302 which is curved around one axis, the input beam image could have near focus around the same axis or close to the same axis but collimated around the second axis. This can produce an astigmatic focus for the input beam of light.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An apparatus comprising:
a light guide configured to receive an input beam of light and provide an expanded output beam of light; and
one or more optical components configured to adjust the expanded output beam of light;
where at least two items of the light guide and the one or more optical components are arranged so that a first item has a first optical power in a first axis and a second item has a second optical power in a second axis wherein the second axis is different to the first axis and the optical powers of the respective items are configured to focus the expanded output beam of light.

2. The apparatus as claimed in claim 1 wherein the light guide comprises in-coupling diffractive means configured to in-couple one or more input beams of light into the light guide, expanding diffractive means configured to expand the one or more input beams of light, and out-coupling diffractive means configured to out-couple the one or more beams of light from the light guide to provide an expanded output beam of light.

3. The apparatus as claimed in any preceding claim wherein the first optical power is provided by at least one curved surface of the first item and the second optical power is provided by at least one curved surface of the second item.

4. The apparatus as claimed in claim 3 wherein the at least one curved surface of the first item is curved around the first axis and the at least one curved surface of the second item is curved around the second axis different to the first axis.

5. The apparatus as claimed in any preceding claim wherein the curvature of one or more of the curved surfaces changes across the curved surface.

6. The apparatus as claimed in any preceding claim wherein the curvature of one or more of the curved surfaces is consistent across the curved surface.

7. The apparatus as claimed in any preceding claim wherein the first item comprises a surface with a convex curvature and the second item comprises a surface with a concave curvature.

8. The apparatus as claimed in any preceding claim wherein the light guide is curved and the one or more optical components comprises a mirror with a curved surface.

9. The apparatus as claimed in any of claims 1 to 7 wherein the light guide is curved and the one or more optical components comprises a lens with a curved surface.

10. The apparatus as claimed in any preceding claim wherein the apparatus comprises an adjustment module configured to enable adjustment of a curvature of at least one of:
the light guide;
the one or more optical components.

11. The apparatus as claimed in any preceding claim wherein diffractive means of the light guide are configured to account for curvature of the light guide.

12. The apparatus as claimed in any of claims 1 to 7 wherein the light guide is planar and the one or more optical components comprises a mirror with a curved surface and a lens with a curved surface.

13. The apparatus as claimed in any preceding display wherein the apparatus is configured to provide a head-up display on a windshield and the optical powers of the items is arranged to compensate for curvature of the windshield and provide a focused image reflected from the windshield.

14. An apparatus as claimed in any preceding claim wherein the apparatus is configured for use in at least one of:
a console display;
a virtual reality display;
an augmented reality display and comprises one or more lenses configured to compensate for the curved lens.

15. A device comprising an apparatus as claimed in any preceding claim wherein the device comprises at least one of:
a terrestrial vehicle;
an aquatic vehicle;
an aerial vehicle.
